# FASCICULE DE BREVET EUROPEEN

(11) **EP 3 516 793 B1**
(45) Date de publication et mention de la délivrance du brevet: **27.05.2020**
(21) Numéro de dépôt: 17772064.6
(22) Date de dépôt: 25.09.2017
(51) Int. Cl.: H04L 5/14, H04B 7/26, H04L 5/00, B64C 39/02

(54) **SYSTEME DE COMMUNICATION DANS UN SYSTEME DE DRONES**
SYSTEM ZUR KOMMUNIKATION IN EINEM SYSTEM AUS DROHNEN
SYSTEM FOR COMMUNICATION IN A SYSTEM OF DRONES

(30) Priorité: 26.09.2016 FR 1601400
(43) Date de publication de la demande: 31.07.2019
(73) Titulaire: Safran Electronics & Defense, 92100 Boulogne-Billancourt (FR)
(72) Inventeur: TODESCHINI, Eric, 92100 Boulogne Billancourt (FR)
(74) Mandataire: Cabinet Le Guen Maillet
(86) Numéro de dépôt international: PCT/EP2017/074238
(87) Numéro de publication internationale: WO 2018/055164

(56) Documents cités:
- US-A1- 2013 100 942
- US-A1- 2014 222 248
- US-B1- 8 184 572
- US-B1- 8 908 573
- DANIEL LIHUI GU ET AL: "C-ICAMA, a centralized intelligent channel assigned multiple access for multi-layer ad-hoc wireless networks with UAVs", WIRELESS COMMUNICATIONS AND NETWORKING CONFERNCE, 2000. WCNC. 2000 IEE E 23-28 SEPTEMBER 2000, PISCATAWAY, NJ, USA,IEEE, vol. 2, 23 septembre 2000 (2000-09-23), pages 879-884, XP010532368, ISBN: 978-0-7803-6596-4

## Description

L'invention concerne un système de communication compris dans un système de dispositifs mobiles sans pilote comprenant une station de commande et au moins un dispositif mobile sans pilote.

La préservation des êtres humains est devenue une préoccupation majeure dans bien des domaines. C'est ainsi que dans beaucoup de missions périlleuses, les êtres humains sont remplacés par des dispositifs mobiles sans pilote. On peut citer par exemple certaines missions d'observation sur des zones dangereuses telles que des zones de conflit, des chantiers en hauteur, ou des sites nucléaires assurées par des dispositifs aéroportés sans pilote appelés drones, des dispositifs roulants, flottants ou submersibles.

Bien que certains dispositifs mobiles sans pilote soient entièrement automatiques, beaucoup de ces dispositifs sont commandés à distance par un ou plusieurs êtres humains à partir d'une station de commande. Ces dispositifs mobiles sans pilote doivent généralement transmettre des résultats d'observation soit à une personne qui les commande, soit à une personne chargée d'analyser des données issues de ces observations. Ces données comprennent fréquemment des images et parfois des vidéos. Il est alors nécessaire d'établir des communications sans fils entre les dispositifs mobiles sans pilote et la station de commande pour assurer un contrôle à distance desdits dispositifs et une transmission des données d'observation. De telles communications doivent être le plus fiable possible afin, d'une part, qu'une perte de contrôle n'entraîne pas la perte d'un dispositif mobile sans pilote pouvant avoir un coût très élevé, et d'autre part, pour que les données d'observation soient le plus exploitables possible.

Un système composé d'au moins une station de base et d'au moins un dispositif mobile sans pilote, dit système de dispositifs mobiles sans pilote, possède un certain nombre de contraintes propres à ce type de système. On peut ainsi citer, par exemple, les contraintes suivantes :
- assurer des communications fiables jusqu'à une distance prédéfinie. Une distance maximale typique est par exemple « 200 km » entre la station de commande et un dispositif mobile sans pilote ;
- utiliser une bande de fréquence appropriée, par exemple la bande de fréquence militaire [4.4 GHz ; 4.9 GHz] ou la bande civile [5.031 GHz ; 5.091 GHz] ;
- assurer un lien de contrôle et de commande fiable de chaque dispositif mobile sans pilote jusqu'à un nombre de dispositifs mobiles sans pilote prédéfini (par exemple quatre dispositifs mobiles sans pilote) ;
- assurer un lien ATC (contrôle de trafic aérien (« Air Traffic Control » en terminologie anglo-saxonne) entre un utilisateur contrôlant le dispositif mobile sans pilote depuis la station de commande et un contrôleur aérien via le dispositif mobile sans pilote avec un temps de latence prédéfini (par exemple inférieur à « 200 ms » pour être compatible avec un signal de conversation audio) ;
- assurer un transport de flux de données utiles (i.e. traces radar, images, flux vidéo) ;

Pour chaque type d'échange de données, un débit peut être fixé, par exemple :
- le lien de contrôle doit autoriser un débit de « 11 Kbits/s » ;
- le lien de commande doit autoriser un débit de « 11 Kbits/s » ;
- le lien ATC doit autoriser un débit de « 3.6 Kbits/s » ;
- le lien de transport de flux de données utiles doit autoriser un débit de « 9 » à « 256 Kbits/s » suivant les données échangées, et le sens d'échange des données.

Le système de dispositifs mobiles sans pilote doit donc utiliser un système de communication adapté à ce type de contrainte. Ce système de communication est composé d'un module de communication côté station de commande et d'un module de communication dans chaque dispositif mobile sans pilote.

Il est donc nécessaire de définir un système de communication adapté au contexte particulier des systèmes de dispositifs mobiles sans pilote, prenant en compte les différentes contraintes liées à ce contexte.

Le document US8908573B1 divulgue un système de communication compris dans un système de dispositifs mobiles sans pilote.

Selon un aspect de la présente invention, la présente invention concerne un système de communication compris dans un système de dispositifs mobiles sans pilote comprenant une station de commande et au moins un dispositif mobile sans pilote, permettant à chaque dispositif mobile sans pilote de communiquer avec la station de commande en utilisant une technique d'accès au médium de type accès multiple à répartition dans le temps dans laquelle chaque communication se fait dans des trames. Le système de communication est tel que : une durée de trame est définie pour chaque trame utilisée dans le système de communication de sorte à obtenir des temps de latence dans chaque communication entre chaque dispositif mobile sans pilote et la station de base compatibles avec une transmission de données audio de conversation ; chaque trame étant divisée en une pluralité d'intervalles temporels comprenant un premier intervalle permettant à la station de commande d'émettre un premier signal désignant un dispositif mobile sans pilote et permettant à chaque dispositif mobile sans pilote de se synchroniser sur une référence temporelle donnée par la station de commande, un deuxième intervalle permettant au dispositif mobile sans pilote désigné par le premier signal d'émettre un deuxième signal lui permettant ainsi d'acquitter sa présence dans le système de dispositifs mobiles sans pilote, et une succession d'intervalles comprenant un nombre d'intervalles dépendant d'un nombre maximum de dispositifs mobiles sans pilote pouvant être contrôlés par la station de commande dans le système de dispositif mobile sans pilotes, les intervalles de la succession d'intervalles étant utilisés pour échanger des données utiles entre chaque dispositif mobile sans pilote et la station de commande ; et, chaque intervalle est divisé en une pluralité de sous-intervalles d'une durée permettant d'obtenir un canal stationnaire pendant ladite durée.

Selon un mode de réalisation, la station de commande comprend une pluralité d'antennes sectorielles couvrant chacune un secteur prédéfini au voisinage de ladite pluralité et les trames utilisées dans ledit système sont organisées en une succession de groupes de trames consécutives, chaque groupe de trames étant organisé suivant une structure de groupe associant chaque trame à un couple formée d'une antenne de la station de commande et d'un dispositif mobile sans pilote compris dans le système de dispositif mobile sans pilote, chaque couple possible étant associé à une trame différente du groupe de trames en fonction d'une position de ladite trame dans ledit groupe, une information représentative de la structure de groupe étant partagée entre la station de commande et chaque dispositif mobile sans pilote.

Selon un mode de réalisation, pour chaque trame, une information représentative de caractéristiques des intervalles compris dans ladite trame est partagée par la station de commande et chaque dispositif mobile sans pilote, cette information comprenant pour chaque intervalle, une information représentative de numéros de sous-intervalle compris dans l'intervalle, un identifiant d'un dispositif parmi la station de commande ou chaque dispositif mobile sans pilote pouvant émettre des données utiles pendant ledit intervalle et un identifiant d'un dispositif parmi la station de commande ou chaque dispositif mobile sans pilote pouvant recevoir des données utiles pendant ledit intervalle.

Selon un mode de réalisation, l'information représentative de caractéristiques des intervalles compris dans ladite trame comprend en outre pour chaque intervalle, un identifiant d'un taux de codage d'un code correcteur d'erreur appliqué aux données utiles transmises durant ledit intervalle.

Selon un mode de réalisation, chaque sous-intervalle est divisé en une pluralité de périodes comprenant une période utilisée pour transmettre une séquence de symboles permettant à la station de commande ou au dispositif mobile sans pilote recevant ladite séquence de symboles de faire une estimation de canal afin de réaliser des synchronisations fréquentielles, de phase, de rythme et des égalisations de signaux de réception et/ou une période permettant de transmettre des données représentatives d'un numéro de sous-intervalle.

Selon un mode de réalisation, la station de commande et chaque dispositif mobile sans pilote comprennent un module d'émission comprenant : un module de codage de canal comprenant un module de codage LDPC utilisé pour coder les données utiles transmises durant un intervalle et un module de codage BCH utilisé pour coder les données représentatives d'un numéro de sous-intervalle ; un module de filtrage en bande de base de type filtre gaussien ; et, un module de modulation à phase continue à déplacement minimum ; et, un module de réception comprenant : un module de filtrage en bande de base adapté pour assurer une sélectivité en bande de base ; un module de démodulation d'une modulation de phase continue à déplacement minimum; un module de décodage BCH; et, un module de décodage LDPC.

Selon un mode de réalisation, le module d'émission comprend en outre un module de sécurité de transmission utilisant une technique de sauts en fréquence et le module de réception comprend en outre un module de sécurité de transmission réciproque correspondant au module de sécurité de transmission ; et, l'information représentative de caractéristiques des intervalles compris dans ladite trame comprend en outre pour chaque intervalle, un identifiant d'un numéro de canal en fréquence utilisé par le module de sécurité de transmission.

Selon un mode de réalisation, le module de codage LDPC est suivi d'un module d'entrelacement temporel de type ligne/colonne et le module de décodage LDPC est précédé d'un module de désentrelacement temporel de type ligne/colonne.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
- la Fig. 1 illustre schématiquement un système de dispositifs mobiles sans pilote selon l'invention ;
- la Fig. 2 illustre schématiquement une zone de portée autour d'un système antennaire d'une station de commande ;
- la Fig. 3 illustre schématiquement une zone de portée autour d'un système antennaire d'un drone ;
- la Fig. 4A illustre schématiquement un module de traitement compris dans une station de commande;
- la Fig. 4B illustre schématiquement un module de traitement compris dans un drone;
- la Fig. 5 illustre schématiquement une technique d'accès au médium selon l'invention, de type accès multiple à répartition dans le temps divisant le temps en plusieurs niveaux hiérarchiques de divisions temporelles;
- la Fig. 6 illustre schématiquement un module d'émission selon l'invention; et,
- la Fig. 7 illustre schématiquement un module de réception selon l'invention.

L'invention est décrite par la suite dans un contexte de système de dispositifs mobiles sans pilote comprenant une station de commande et de un à quatre drones. Nous appelons donc par la suite le système de dispositifs mobiles sans pilote *système de drones.* L'invention s'applique toutefois dans d'autres contextes. Par exemple l'invention pourrait tout aussi bien s'appliquer à d'autres dispositifs mobiles sans pilote tels que des dispositifs roulants, flottants ou submersibles. Par ailleurs l'invention pourrait s'appliquer avec un nombre différent de drones.

Cinq contraintes principales sont définies pour le développement du système de drones selon l'invention :
- le système de drones doit coexister avec d'autres systèmes de drones dans un réseau de systèmes de drones. Chaque station de commande d'un système de drones possède une zone de portée qui peut être vue comme une cellule de communication. Le système de communication du système de drones doit permettre à un drone de transiter d'une cellule de communication à une autre de manière synchrone ;
- le système de communication du système de drones doit avoir des latences compatibles avec des communications de signaux audio de conversation ;
- une transmission de données utiles dans le système de communication se faisant par blocs de données, le système de communication doit permettre de transmettre chaque bloc de données sur un canal stationnaire ;
- le système de communication du système de drone doit permettre de contrôler un drone jusqu'à une distance prédéfinie (par exemple « 200 km »).
- Le système de communication du système de drone doit supporter jusqu'à quatre drones simultanément.

Le système de communication du système de drone de l'invention doit permettre de respecter conjointement au moins ces cinq contraintes.

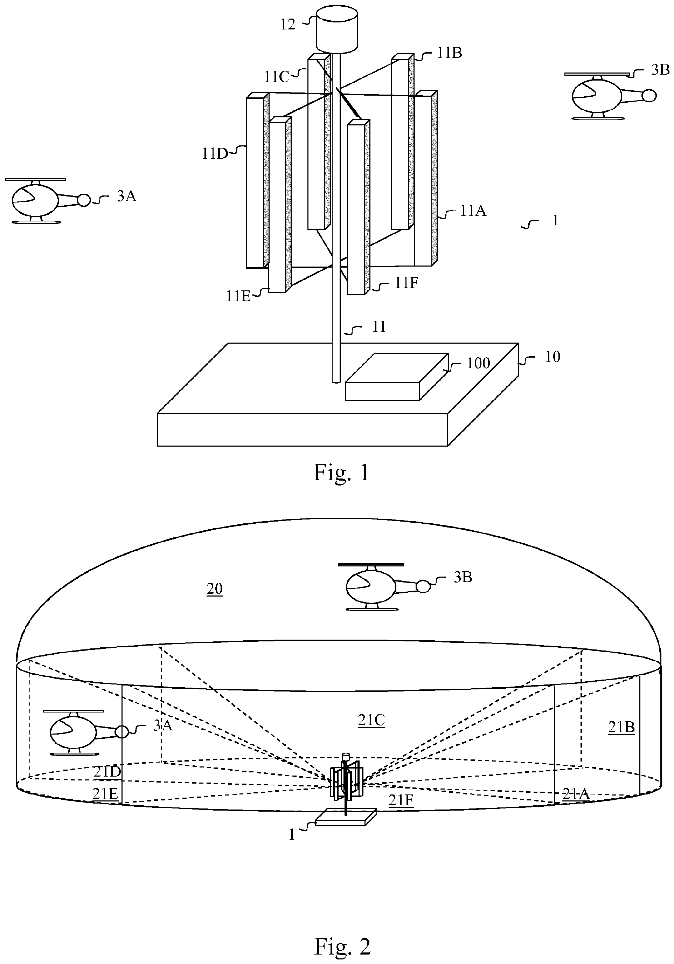

La **Fig. 1** illustre schématiquement un exemple de système de drones selon l'invention.

Dans l'exemple de la Fig. 1, un système de drones 1 comprend une station de commande 10 permettant de contrôler simultanément des drones 3A et 3B. Ce système de drones est défini de manière à être compatible avec les cinq contraintes principales.

La station de commande 10 comprend un système antennaire 11 comprenant une pluralité d'antennes. La station de commande 10 comprend un module de traitement 100. La pluralité d'antennes comprend six antennes sectorielles 11A, 11B, 11C, 11D, 11E et 11F et une antenne omnidirectionnelle 12. Chaque antenne sectorielle permet de couvrir à « - 3dB » un azimut de « 60° » et une élévation de « +8° ». Les antennes sectorielles disposent chacune d'un gain à « +14dBi ». L'antenne omnidirectionnelle 12 permet de couvrir à « -3dB » un azimut de « 360° » et de « +8° » à « +90° » en élévation avec un gain allant de « +2.5 dBi » à « +6 dBi ». L'antenne omnidirectionnelle 12 sert à faible distance pour des passages de drones au-dessus du système antennaire 11 de la station de commande 10. On note que, outre l'amélioration en termes de gain obtenue grâce à la combinaison d'une antenne omnidirectionnelle avec des antennes sectorielles par rapport à une solution basée uniquement sur des antennes omnidirectionnelles, une utilisation d'antennes sectorielles permet d'être moins sensible à des multi-trajets du fait de la directivité des antennes sectorielles. Les caractéristiques de ce système antennaire 11 contribuent à permettre au système de communication du système de drones 1 d'atteindre la distance prédéfinie fixée dans les contraintes principales.

Chaque drone (3A ou 3B) comprend un système antennaire (non représenté) comprenant deux antennes omnidirectionnelles (non représentées), une antenne omnidirectionnelle permettant de couvrir à « -3dB » un azimut de « 360° » et de « 0° » à « +90° » en élévation et une antenne omnidirectionnelle permettant de couvrir à « - 3dB » un azimut de « 360° » et de « 0° » à « -90° » en élévation.

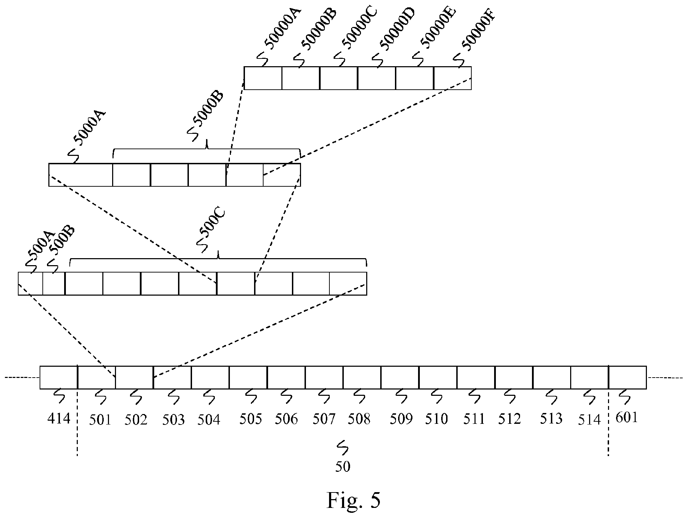

Le système de drones 1 décrit en relation avec la Fig. 1 forme un réseau de communication dans lequel la station de commande 10 communique avec les drones 3A et 3B. La station de commande 10 et les drones 3A et 3B échangent notamment des données de contrôle et de commande dans le sens station de commande 10 vers drone (3A ou 3B) et des données utiles (par exemple des données d'observation) dans le sens drone (3A ou 3B) vers station de commande 10. Dans le système de drones 1, la station de commande 10 et les drones 3A et 3B utilisent une technique d'accès au médium de type accès multiple à répartition dans le temps (TDMA : « Time Division Multiple Access » en terminologie anglo-saxonne), que nous appelons par la suite TDMA pour simplifier. Le TDMA divise le temps en plusieurs niveaux hiérarchiques de divisions temporelles que nous décrivons pas la suite en relation avec la Fig. 5. Cette technique d'accès au medium nécessite une synchronisation temporelle au niveau de chaque nœud du réseau de communication (*i.e.* au niveau de la station de commande 10 et des drones 3A et 3B) pour éviter tout chevauchement temporel. Le réseau de communication de la Fig. 1 utilise une topologie centralisée dans laquelle la station de commande 10 agit comme un nœud *maître,* c'est-à-dire que la station de commande 10 cadence temporellement l'ensemble du réseau. Les autres nœuds (*i.e.* les drones 3A et 3B) sont *esclaves* du nœud maître et se calent temporellement sur une référence temporelle donnée par le nœud maître.

La **Fig. 2** illustre schématiquement un exemple de zone de portée autour du système antennaire 11 de la station de commande 10.

La zone de portée autour du système antennaire 11 peut être vue schématiquement comme une coupole posée sur un cylindre horizontal ayant pour centre le système antennaire. Cette zone de portée comprend 7 secteurs. Les six antennes sectorielles 11A, 11B, 11C, 11D, 11E et 11F définissent respectivement six secteurs 21A, 21B, 21C, 21D, 21E et 21F. Chacun des 6 secteurs 21A, 21B, 21C, 21D, 21E et 21F possède une forme semi-pyramidale d'azimut « 60° » et de « +8° » d'élévation. Toutes les formes pyramidales partagent un même sommet situé au niveau du système antennaire 11. Les secteurs 21A, 21B, 21C, 21D, 21E et 21F forment un secteur combiné de « 360° » d'azimut et de « +8° » d'élévation inscrit dans le cylindre horizontal. La partie restante de l'ensemble formé par la coupole et le cylindre est le secteur 20 couvert par l'antenne omnidirectionnelle 12.

Dans l'exemple de la Fig. 2, le drone 3A est situé dans le secteur 21D couvert par l'antenne 11D et le drone 3B est situé dans le secteur 20 couvert par l'antenne 12. On se rend alors compte que, en fonction de la position d'un drone dans la zone de portée du système antennaire 11, chaque antenne n'offre pas la même capacité de communication avec ledit drone.

On note que la Fig. 2 représente une vision théorique d'un découpage en secteur d'une zone de portée et qu'en réalité la zone de portée d'une antenne est un lobe d'émission ayant une intersection non nulle avec des lobes d'émission d'autres antennes de son voisinage.

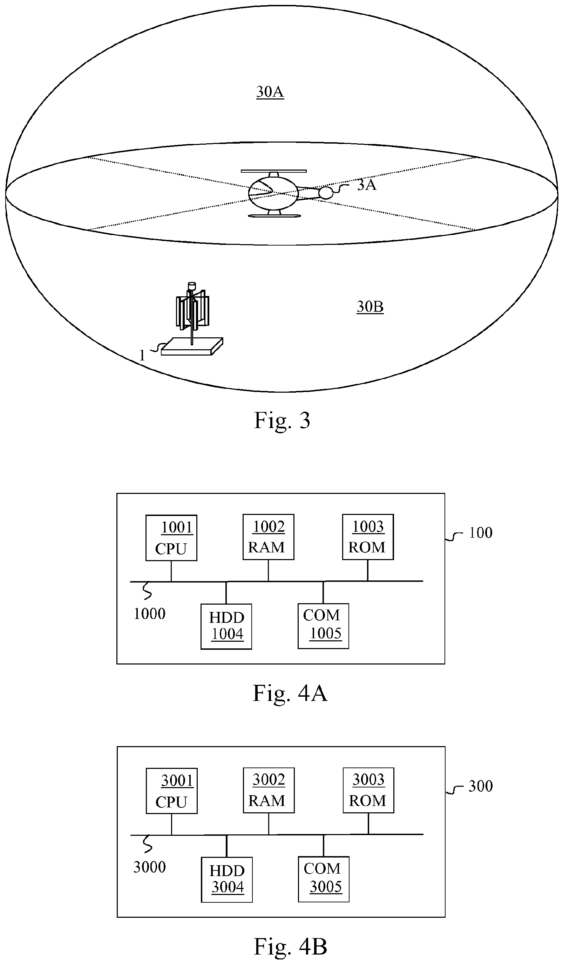

La **Fig. 3** illustre schématiquement une zone de portée autour d'un système antennaire d'un drone.

La zone de portée autour du système antennaire d'un drone peut être représentée par une sphère. Les antennes omnidirectionnelles du système antennaire de chaque drone découpent ladite sphère en deux secteurs semi-hémisphériques (*i.e.* deux demi-sphères) 30A et 30B séparées par un plan horizontal. Dans l'exemple de la Fig. 3, le système antennaire 11 de la station de commande 10 se situe dans le secteur 30B.

Dans le système de drones 1, une seule antenne du système antennaire 11 et une seule antenne d'un drone émettent ou reçoivent à la fois. Une procédure de sélection de l'antenne du système antennaire 11 est mise en œuvre périodiquement par le module de traitement 100 pour déterminer quelle antenne offre la meilleure qualité de communication entre la station de commande 10 et le drone 3A (respectivement le drone 3B) à un instant donné. De même, une procédure de sélection d'une antenne de drone est mise en œuvre périodiquement par un module de traitement 300 compris dans chaque drone (3A ou 3B) pour déterminer quelle antenne offre la meilleure qualité de communication entre la station de commande 10 et ledit drone à un instant donné.

La **Fig. 4A** illustre schématiquement un exemple d'architecture matérielle du module de traitement 100 compris dans la station de commande 10.

Selon l'exemple d'architecture matérielle représenté à la Fig. 4A, le module de traitement 100 comprend alors, reliés par un bus de communication 1000 : un processeur ou CPU (« Central Processing Unit » en anglais) 1001 ; une mémoire vive RAM (« Random Access Memory » en anglais) 1002 ; une mémoire morte ROM (« Read Only Memory » en anglais) 1003 ; une unité de stockage telle qu'un disque dur ou un lecteur de support de stockage, tel qu'un lecteur de cartes SD (« Secure Digital » en anglais) 1004 ; au moins une interface de communication 1005 permettant au module de traitement 100 de communiquer avec d'autres modules ou dispositifs. Par exemple l'interface de communication 1005 permet au module de traitement 100 de communiquer avec d'autres modules de la station de commande 10 tels qu'un module de commutation d'antennes permettant de sélectionner une antenne à utiliser à un instant donné ou avec d'autres dispositifs tels que les drones 3A et 3B.

Le processeur 1001 est capable d'exécuter des instructions chargées dans la RAM 1002 à partir de la ROM 1003, d'une mémoire externe (non représentée), d'un support de stockage (tel qu'une carte SD), ou d'un réseau de communication. Lorsque le module de commande 10 est mis sous tension, le processeur 1001 est capable de lire de la RAM 1002 des instructions et de les exécuter. Dans un mode de réalisation, ces instructions forment un programme d'ordinateur causant la mise en œuvre de communications entre la station de base 10 et chaque drone du système de drones 1 et une procédure de sélection d'une antenne du système antennaire 11 pour communiquer avec chaque drone du système de drone 1 à un instant donné.

La **Fig. 4B** illustre schématiquement un exemple d'architecture matérielle d'un module de traitement 300 compris dans un drone tel que le drone 3A ou le drone 3B.

Selon l'exemple d'architecture matérielle représenté à la Fig. 4B, le module de traitement 300 comprend alors, reliés par un bus de communication 3000 : un processeur ou CPU (« Central Processing Unit » en anglais) 3001 ; une mémoire vive RAM (« Random Access Memory » en anglais) 3002 ; une mémoire morte ROM (« Read Only Memory » en anglais) 3003 ; une unité de stockage telle qu'un disque dur ou un lecteur de support de stockage, tel qu'un lecteur de cartes SD (« Secure Digital » en anglais) 3004 ; au moins une interface de communication 3005 permettant au module de traitement 300 de communiquer avec d'autres modules ou dispositifs. Par exemple l'interface de communication 3005 permet au module de traitement 300 de communiquer avec d'autres modules tels qu'un module de commutation d'antennes permettant de sélectionner une antenne à utiliser à un instant donné ou avec la station de commande 10.

Le processeur 3001 est capable d'exécuter des instructions chargées dans la RAM 3002 à partir de la ROM 3003, d'une mémoire externe (non représentée), d'un support de stockage (tel qu'une carte SD), ou d'un réseau de communication. Lorsqu'un drone (3A ou 3B) est mis sous tension, le processeur 3001 est capable de lire de la RAM 3002 des instructions et de les exécuter. Dans un mode de réalisation, ces instructions forment un programme d'ordinateur causant la mise en œuvre de communications entre le drone comprenant le module de traitement 300 et la station de commande 10.

Les procédés mis en œuvre par le module de traitement 100 et le module de traitement 300 peuvent être implémentés sous forme logicielle par exécution d'un ensemble d'instructions par une machine programmable, par exemple un DSP (« Digital Signal Processor » en anglais) ou un microcontrôleur, ou être implémentés sous forme matérielle par une machine ou un composant dédié, par exemple un FPGA (« Field-Programmable Gate Array » en anglais) ou un ASIC (« Application-Specific Integrated Circuit » en anglais).

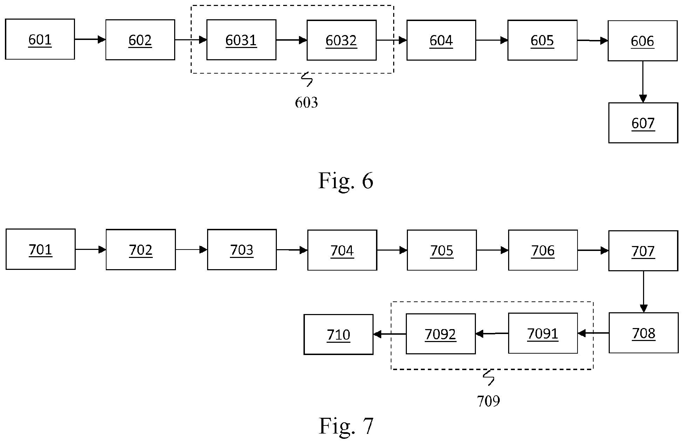

La **Fig. 6** illustre schématiquement un module d'émission selon l'invention.

L'interface de communication 1005 de la station de commande 10 et l'interface de communication 3005 de chaque drone 3A et 3B comprennent chacune un module d'émission identique au module d'émission décrit en relation avec la Fig. 6.

Le module d'émission comprend :
- un module de multiplexage 601 ;
- un module de formation de blocs de données (appelés « burst » en terminologie anglo-saxonne) 602 ;
- un module de codage canal 603 comprenant un module 6031 de codage LDPC (contrôle de parité de faible densité : « Low Density Parity Check » en terminologie anglo-saxonne) et un module 6032 de codage BCH (Bose, Ray-Chaudhuri et Hocquenghem, selon les noms des inventeurs) ;
- un module 604 de filtrage en bande de base tel qu'un filtre gaussien ;
- un module 605 de modulation MSK (modulation à phase continue à déplacement minimum : « Minimum Shift Keying » en terminologie anglo-saxonne). La combinaison du module de filtrage utilisant un filtre gaussien et du module de modulation MSK crée un module de modulation GMSK (modulation à déplacement minimum Gaussien : « Gaussian Minimum Shift Keying » en terminologie anglo-saxonne);
- un module radio-fréquence 606 comprenant un module de transposition de la bande de base vers la bande de fréquence militaire [4.4 GHz ; 4.9 GHz] ou la bande civile [5.031 GHz ; 5.091 GHz], un module d'amplification à forte puissance (« High Power amplifier (HPA) » en terminologie anglo-saxonne), un filtre d'émission et un commutateur (« switch » en terminologie anglo-saxonne) permettant une sélection entre le module d'émission et un module de réception.
- Un système antennaire 607 correspondant au système antennaire 11 pour la station de commande 10 ou au système antennaire du drone pour le drone 3A et le drone 3B.

La modulation choisie (*i.e.* la modulation GMSK) permet de réaliser un codage canal de type convolutionnel du fait d'un effet mémoire introduit par le filtre gaussien. La modulation GMSK est particulièrement adaptée pour atteindre les débits souhaités sur chaque canal prévu dans la bande de fréquence utilisée (*i.e.* la bande de fréquence militaire [4.4 GHz ; 4.9 GHz] ou la bande civile [5.031 GHz ; 5.091 GHz]).

Comme décrit plus haut, le module de codage canal 603 comprend deux sous-modules : un module de codage LDPC 6031 et un module de codage BCH 6032.

Dans un mode de réalisation, le module de codage LDPC 6031 peut être suivi par un module d'entrelacement temporel de type ligne/colonne. L'entrelacement se fait sur les données utiles comprises dans chaque sous-intervalle temporel d'un intervalle temporel (timeslot).

Dans un mode de réalisation, le module d'émission comprend un module de sécurité de transmission (« TRANsmission SECurity (TRANSEC) » en terminologie anglo-saxonne) utilisant par exemple une technique de sauts en fréquence (étalement de spectre par évasion de fréquence, « Frequency Hopping Spread Spectrum (FHSS) » en terminologie anglo-saxonne).

La **Fig. 7** illustre schématiquement un module de réception. L'interface de communication 1005 de la station de commande 10 et l'interface de communication 3005 de chaque drone 3A et 3B comprennent chacune un module de réception identique au module de réception décrit en relation avec la Fig. 7.

Le module de réception comprend :
- un système antennaire 701 correspondant au système antennaire 11 pour la station de commande 10 ou au système antennaire du drone pour le drone 3A et le drone 3B. On note que, pour la station de commande 10 et chaque drone, les systèmes antennaires 607 et 701 sont en réalité un seul et même système antennaire d'émission et de réception ;
- un filtre de réception 702 permettant une sélection d'une bande de fréquence. Ce filtre de réception permet par exemple de sélectionner la bande de fréquence militaire [4.4 GHz ; 4.9 GHz] ou la bande civile [5.031 GHz ; 5.091 GHz] ;

- un amplificateur faible bruit 703 (« Low Noise Amplifier : LNA » en terminologie anglo-saxonne) ;
- un module de transposition en fréquence 704 de la bande de fréquence militaire [4.4 GHz ; 4.9 GHz] ou la bande civile [5.031 GHz ; 5.091 GHz] vers la bande de base ;
- un module de filtrage en bande de base 705 permettant d'assurer une sélectivité en bande de base ;
- un module d'égalisation de signal en bande de base 706 permettant de s'affranchir en partie de phénomènes de multi-trajets ;
- un module de synchronisation en fréquence et en phase 707 ;
- un module de démodulation GMSK 708 ;
- un module de décodage BCH 7091 ;
- un module de décodage LDPC 7092 ;
- un module de démultiplexage des flux de données 710 ;

On note que lorsque, dans le module d'émission, le module de codage LDPC 6031 est suivi d'un module d'entrelacement temporel de type ligne/colonne, le module de décodage LDPC 7092 est précédé d'un module de désentrelacement temporel de type ligne/colonne.

Par ailleurs, lorsque le module d'émission comprend un module de sécurité de transmission (TRANSEC), le module de réception comprend un module de sécurité de transmission réciproque.

La **Fig. 5** illustre schématiquement une technique d'accès au médium selon l'invention, de type accès multiple à répartition dans le temps divisant le temps en plusieurs niveaux hiérarchiques de divisions temporelles.

Le TDMA divise le temps en un premier niveau de hiérarchie appelé *époque (EPOCH en terminologie anglo-saxonne)* (non représenté dans la Fig. 5) par exemple d'une durée de « 1s ». Un intérêt d'utiliser une époque d'une durée de « 1s » est, dans le cas d'une utilisation d'une référence temporelle universelle délivrée par exemple par un signal GPS (« Global Positioning System » en terminologie anglo-saxonne), de permettre un passage d'une cellule de communication à une autre de manière synchrone. Le système de communication du système de drones 1 permet donc de respecter une deuxième contrainte principale.

Dans l'exemple du système de drones 1, une époque est divisée en « 5 » trames par exemple d'une durée de « 200 ms ». Une durée de trame de « 200 ms » permet de disposer d'un temps de latence dans une communication entre un drone et la station de commande compatible avec une transmission de données audio de conversation. Ainsi le système de communication du système de drones 1 respecte une troisième contrainte principale.

En plus d'être organisées en époques, les trames utilisées dans le système de drones 1 sont organisées en une succession de groupes de trames consécutives. Un groupe de trames 50 est représenté en Fig. 5. Le groupe de trames 50 comprend un nombre de trames égal au nombre d'antennes du système antennaire 11 de la station de commande (*i.e*. sept) multiplié par le nombre de drones en activité dans le système de drones 1 (*i.e.* deux drones). Il y a donc autant de trames dans un groupe de trames que de couples possibles formés d'une antenne du système antennaire 11 et d'un drone. Le groupe de trames 50 comprend donc quatorze trames 501 à 514. Une trame 414 appartient à un groupe de quatorze trames précédant le groupe de trames 50 et une trame 601 appartient à un groupe de quatorze trames suivant le groupe de trames 50. Nous verrons par la suite que l'organisation en groupes de trames permet de définir dans le système de drones 1 quelle antenne du système antennaire 11 doit émettre un signal en direction d'un drone donné et ainsi de mettre en œuvre une procédure de sélection de l'antenne offrant la meilleure qualité de transmission entre la station de commande 10 et ledit drone.

La Fig. 5 donne un détail de la trame 502 comprise dans le groupe de trames 50, toutes les trames utilisées dans le système de drones 1 ayant une structure de trame identique. La trame 502 est divisée en une pluralité d'intervalles temporels (« timeslot » en terminologie anglo-saxonne). La pluralité d'intervalles temporels comprend un premier intervalle 500A permettant à la station de commande 10 d'émettre un premier signal appelé *balise* (« beacon » en terminologie anglo-saxonne) permettant à chaque drone de se synchroniser sur une référence temporelle donnée par la station de commande 10. C'est grâce à cette balise que les drones du système de drones 1 peuvent se synchroniser avec la station de commande 10. Par ailleurs, comme nous le verrons par la suite, la position de la trame dans le groupe de trames indique à quel drone la balise est destinée. On considère donc que le premier signal désigne un drone parmi les drones du système de drones 1.

La pluralité d'intervalles temporels comprend de plus un deuxième intervalle 500B permettant au drone désigné par le premier signal d'émettre un deuxième signal lui permettant ainsi d'acquitter sa présence dans le système de drones 1.

Les intervalles 500A et 500B sont suivis d'une succession d'intervalles 500C. La succession d'intervalles 500C comprend un nombre d'intervalles dépendant du nombre maximum de drones pouvant être contrôlés dans le système de drones 1 (*i.e.* quatre drones). Dans le TDMA utilisé dans le système de drones 1, chaque drone pouvant potentiellement être contrôlé est associé à 2 intervalles consécutifs dans la succession d'intervalles : un intervalle durant lequel le drone peut recevoir des données en provenance de la station de commande 10 et un intervalle durant lequel le drone peut émettre des données en direction de la station de commande 10. Chaque drone et la station de commande 10 partagent une information décrivant une allocation des intervalles 500A, 500B et de la succession d'intervalles 500C dans une trame. Dans l'exemple décrit en relation avec la Fig. 5, la succession d'intervalles comprend huit intervalles. Le système de communication du système de drones 1 peut donc gérer jusqu'à quatre drones simultanément. Ainsi le système de communication du système de drones 1 respecte une quatrième contrainte principale.

L'information décrivant l'allocation prend la forme d'une table d'allocation partagée par tous les nœuds du réseau. Cette table d'allocation peut être fixe ou être mise à jour de manière synchrone dans tous les nœuds du réseau pour, par exemple, prendre en compte des arrêts de drones ou des arrivées de nouveaux drones dans le système de drones 1.

Au moins une table d'allocation est transmise durant chaque trame dans l'intervalle 500A. Ainsi, chaque nœud recevant une table d'allocation pendant une trame connaît l'allocation des intervalles dans ladite trame. En utilisant cette table d'allocation, chaque drone sait dans quel intervalle de la trame il doit émettre en direction de la station de commande 10 et dans quel intervalle de la trame il peut recevoir des données en provenance de la station de commande 10. De même, la station de commande 10 sait dans quel intervalle elle peut émettre des données en direction d'un drone donné et dans quel intervalle d'une trame elle peut recevoir des données en provenance d'un drone donné. Par exemple, dans la Fig. 5, la succession d'intervalles 500C comprend un premier intervalle utilisé pour communiquer de la station de commande 10 vers le drone 3A, un deuxième intervalle utilisé pour communiquer du drone 3A vers la station de commande 10, un troisième intervalle utilisé pour communiquer de la station de commande 10 vers le drone 3B et un quatrième intervalle utilisé pour communiquer du drone 3B vers la station de commande 10. Les quatre derniers intervalles sont laissés libres par exemple pour deux autres drones éventuels.

Chaque intervalle possède par exemple une durée de « 20 ms » correspondant à une division d'une trame en « 10 » intervalles (timeslot). Un intervalle de « 20 ms » permet de contenir un bloc LDPC complet, ce qui permet de limiter des latences de transmission de chacun des nœuds.

La Fig. 5 donne de plus un détail d'un intervalle (timeslot) de la trame 502, chaque intervalle d'une trame ayant une structure identique. Un intervalle d'une trame comprend un sous-intervalle 5000A permettant de prendre en compte des temps de propagation dans le système de drones 1, et un ensemble de sous-intervalles 5000B (appelés « burst interval » en terminologie anglo-saxonne). Le temps de propagation pour atteindre un des drones 3A ou 3B depuis la station de commande 10 à une distance maximale typique de « 200 km » pour des signaux radioélectriques utilisés dans la bande de fréquence militaire [4.4 GHz ; 4.9 GHz] ou la bande civile [5.031 GHz ; 5.091 GHz] est de l'ordre de « 0.8 ms ». Dans le système de drones 1, chaque intervalle comprend un ensemble de « 5 » sous-intervalles 5000B. Par conséquent, chaque sous-intervalle possède une durée de « 3.84 ms ». Une durée de sous-intervalle de « 3.84 ms » permet d'obtenir un canal considéré comme stationnaire pendant la durée d'un sous-intervalle. De cette manière, le système de communication du système de drones 1 respecte une cinquième contrainte principale.

Dans un mode de réalisation, la table d'allocation décrit la structure en sous-intervalles des intervalles (timeslot).

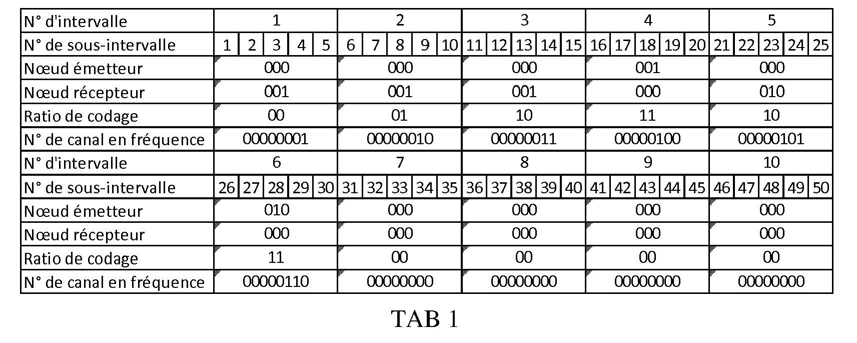

Le tableau TAB 1 représente une table d'allocation des intervalles d'une trame. Cette table d'allocation décrit pour chaque intervalle d'une trame, identifié par un numéro d'intervalle, les numéros des sous-intervalles compris dans cet intervalle, un identifiant d'un nœud émetteur pouvant émettre pendant cet intervalle, un identifiant d'un nœud récepteur pouvant recevoir pendant cet intervalle, un identifiant d'un ratio de codage canal. Les identifiants « 000 », «001» et «010» sont par exemple respectivement les identifiants de la station de commande 10, du drone 3A et du drone 3B. Les identifiants « 00 », « 01 », « 10 » et « 11 » sont par exemple respectivement des identifiants de taux de codage « 0 », « 1/3 », « 1/2 » et « 2/3 » pour le codeur LDPC 6031. Lorsque tous les identifiants associés à un sous-intervalle sont à « 0 », chaque nœud du réseau peut déduire que ce sous-intervalle n'est pas attribué.

Dans le mode de réalisation dans lequel le module d'émission et le module de réception comprennent un module de sécurité de transmission (TRANSEC) utilisant une technique de saut en fréquence, chaque intervalle est associé à un identifiant de numéro de canal en fréquence pouvant être utilisé par le module de sécurité de transmission. Chaque identifiant de canal en fréquence permet d'identifier un des canaux disponibles dans la bande de fréquence militaire [4.4 GHz ; 4.9 GHz] ou la bande civile [5.031 GHz ; 5.091 GHz]. Chaque bloc de données (burst) transmis pendant un sous-intervalle peut ainsi être transmis en utilisant une fréquence différente. Un découpage d'un intervalle en « 5 » sous-intervalles permet d'obtenir « 250 » sauts en fréquence par secondes.

La Fig. 5 donne par ailleurs un détail d'un sous-intervalle d'un intervalle (timeslot) d'une trame, chaque sous-intervalle ayant une structure identique. Chaque sous-intervalle comprend une période 50000A dite *temps de garde du sous-intervalle* (« burst guard time » en terminologie anglo-saxonne), une période 50000B dite *temps de montée des amplificateurs haute puissance* (« High Power Amplifier (HPA) ramping » en terminologie anglo-saxonne) et une période 50000F dite *temps de descente des amplificateurs haute puissance* (« High Power Amplifier (HPA) ramping off » en terminologie anglo-saxonne) destinées à prendre en compte des temps de réaction de composants électroniques d'un drone 3A ou 3B ou de la station de commande 10. Une période 50000C (appelée *préambule séquence*) est utilisée pour transmettre une séquence de symboles permettant au nœud récepteur de faire une estimation du canal afin de réaliser des synchronisations fréquentielles, de phase, de rythme et des égalisations de signaux de réception. Ces synchronisations permettent de synchroniser des lectures d'échantillons suivant la période 50000C dans le sous-intervalle. Une période 50000D (appelée *mode sélection*) permet de transmettre une information représentative d'un numéro de sous-intervalle pour assurer une synchronisation temporelle de chacun des drones sur la station de commande. Par ailleurs, ce numéro de sous-intervalle permet à chacun des nœuds de déterminer s'il est concerné par ledit sous-intervalle pour émettre ou recevoir des données. Les données représentatives du numéro de sous-intervalle transmises au cours de la période 50000D sont codées par le module de codage BCH 6032 indépendamment de toutes autres données du sous-intervalle. Une période 50000E (appelée *bloc de données*) permet de transmettre des données utiles. Les données utiles transmises au cours de la période 50000E sont codées par le module de codage LDPC 6031. L'encodage indépendant des données correspondant au numéro de sous-intervalle permet de décoder ces données sans avoir à décoder les données utiles. De cette manière, lors d'une réception, un module de traitement (100 ou 300) est capable de déterminer si des données utiles transmises dans un bloc de données lui sont destinées ou pas, sans avoir à décoder lesdites données utiles.

La période 50000A est d'une durée permettant notamment à un détecteur de sous-intervalles de distinguer les sous-intervalles entre eux. Les périodes 50000B et 50000F dépendent des amplificateurs haute puissance utilisés. La période 50000D dépend d'un nombre de symboles nécessaire pour coder le numéro de sous-période. La période 50000E dépend d'une durée durant laquelle le canal de transmission reste quasi-stationnaire.

Comme nous l'avons vu plus haut, chaque groupe de trames utilisé dans le système de drones 1 est organisé suivant une structure de groupe associant chaque trame à un couple formée d'une antenne de la station de commande 10 et d'un drone, chaque couple possible étant associé à une trame différente en fonction de la position de ladite trame dans le groupe. Par exemple, dans la Fig. 5, les trames 501 à 507 sont associées au drone 3A et les trames 508 à 514 sont associées au drone 3B. La trame 501 est associée à l'antenne 11A, la trame 502 est associée à l'antenne 11B, la trame 503 est associée à l'antenne 11C, la trame 504 est associée à l'antenne 11D, la trame 505 est associée à l'antenne 11E, la trame 506 est associée à l'antenne 11F, et la trame 507 est associée à l'antenne 12. La trame 508 est associée à l'antenne 11A, la trame 509 est associée à l'antenne 11B, la trame 510 est associée à l'antenne 11C, la trame 511 est associée à l'antenne 11D, la trame 512 est associée à l'antenne 11E, la trame 513 est associée à l'antenne 11F, et la trame 514 est associée à l'antenne 12.

Chaque nœud, connaissant la durée de chaque trame et étant synchronisé avec la station de commande 10, est capable de déterminer quand débute une trame, même lorsqu'il ne reçoit pas de données pour certaines trames. Par ailleurs, à partir des informations contenues dans chaque table d'allocation, chaque nœud est capable de déterminer la structure de groupe. En effet, à partir du nombre d'intervalles attribués dans une trame, chaque nœud est capable de déterminer le nombre de drones actifs dans le système de drones 1. Chaque drone connaissant le nombre d'antennes du système antennaire 11, il est capable de déterminer le nombre de trames dans un groupe de trames. Dans un mode de réalisation, chaque nœud connaît une structure de groupe pour chaque nombre de drones actifs possible dans le système de drones 1 (*i.e.* de « 1 » à « 4 » drones actifs). Par ailleurs, dans un mode de réalisation, une information représentative d'une position d'une trame dans un groupe de trames est transmise dans l'intervalle 500A de chaque trame. Ainsi à partir de la position d'une trame en cours dans un groupe de trames, chaque nœud est capable de déterminer quelle est l'antenne de la station de commande 10 émettrice d'une balise et à quel drone ladite balise est destinée. Ces informations sur la structure de groupe permettent, entre autres, au module de traitement 100 de la station de commande 10 de mettre en œuvre un procédé de sélection d'antenne, lui permettant de sélectionner parmi les antennes du système antennaire 11, l'antenne offrant la meilleure qualité de communication avec un drone donné. En effet, en reprenant l'exemple de la Fig. 5, pour chaque balise transmise dans les trames 501 à 507, le module de traitement 100 reçoit un signal d'acquittement de la part du drone 3A contenant une information représentative d'une qualité de réception de la balise mesurée par le drone. Une information représentative d'une qualité de réception est par exemple une mesure de RSSI (« Received Signal Strength Indication » en terminologie anglo-saxonne) mesurée lors d'une réception d'une balise. A partir des informations représentatives d'une qualité de réception obtenues, le module de traitement 100 détermine quelle antenne offre la meilleure qualité de communication et sélectionne cette antenne pour un nombre de trames prédéterminé suivant la trame 507. Par exemple, le module de traitement 100 sélectionne une antenne pour le drone 3A jusqu'à l'émission de la prochaine trame contenant une balise désignant le drone 3A. Dans l'exemple de la Fig. 1 avec deux drones dans le système de drones 1, cela revient à sélectionner une antenne pendant « 7 » trames. Le module de traitement 100 fait de même pour le drone 3B à partir des trames 508 à 514 pour sélectionner la meilleure antenne pour communiquer avec le drone 3B.

## Revendications

1. Système de communication compris dans un système de dispositifs mobiles sans pilote (1) comprenant une station de commande (10) et au moins un dispositif mobile sans pilote (3A, 3B), permettant à chaque dispositif mobile sans pilote (3A, 3B) de communiquer avec la station de commande (10) en utilisant une technique d'accès au médium de type accès multiple à répartition dans le temps dans laquelle chaque communication se fait dans des trames, une durée de trame étant définie pour chaque trame utilisée dans le système de communication de sorte à obtenir des temps de latence dans chaque communication entre chaque dispositif mobile sans pilote (3A, 3B) et la station de base (10) compatibles avec une transmission de données audio de conversation ;
le système étant **caractérisé en ce que**
chaque trame étant divisée en une pluralité d'intervalles temporels comprenant un premier intervalle (500A) permettant à la station de commande (10) d'émettre un premier signal désignant un dispositif mobile sans pilote (3A, 3B) et permettant à chaque dispositif mobile sans pilote (3A, 3B) de se synchroniser sur une référence temporelle donnée par la station de commande (10), un deuxième intervalle (500B) permettant au dispositif mobile sans pilote (3A, 3B) désigné par le premier signal d'émettre un deuxième signal lui permettant ainsi d'acquitter sa présence dans le système de dispositifs mobiles sans pilote (1), et une succession d'intervalles (500C) comprenant un nombre d'intervalles dépendant d'un nombre maximum de dispositifs mobiles sans pilote pouvant être contrôlés par la station de commande (10) dans le système de dispositif mobile sans pilote (1), les intervalles de la succession d'intervalles (500C) étant utilisés pour échanger des données utiles entre chaque dispositif mobile sans pilote (3A, 3B) et la station de commande (10) ; et,
chaque intervalle est divisé en une pluralité de sous-intervalles (5000A, 5000B) d'une durée permettant d'obtenir un canal stationnaire pendant ladite durée.

2. Système de communication selon la revendication 1, **caractérisé en ce que** la station de commande (10) comprend une pluralité d'antennes sectorielles (11) couvrant chacune un secteur prédéfini au voisinage de ladite pluralité et **en ce que** les trames utilisées dans ledit système sont organisées en une succession de groupes de trames consécutives (50), chaque groupe de trames étant organisé suivant une structure de groupe associant chaque trame à un couple formée d'une antenne de la station de commande (10) et d'un dispositif mobile sans pilote (3A, 3B) compris dans le système de dispositif mobile sans pilote (1), chaque couple possible étant associé à une trame différente du groupe de trames (50) en fonction d'une position de ladite trame dans ledit groupe, une information représentative de la structure de groupe étant partagée entre la station de commande (10) et chaque dispositif mobile sans pilote (3A, 3B).

3. Système de communication selon la revendication 2, **caractérisé en ce que**, pour chaque trame, une information représentative de caractéristiques des intervalles compris dans ladite trame est partagée par la station de commande (10) et chaque dispositif mobile sans pilote (3A, 3B), cette information comprenant pour chaque intervalle, une information représentative de numéros de sous-intervalle compris dans l'intervalle, un identifiant d'un dispositif parmi la station de commande (10) ou chaque dispositif mobile sans pilote (3A, 3B) pouvant émettre des données utiles pendant ledit intervalle et un identifiant d'un dispositif parmi la station de commande (10) ou chaque dispositif mobile sans pilote (3A, 3B) pouvant recevoir des données utiles pendant ledit intervalle.

4. Système de communication selon la revendication 3, **caractérisé en ce que** l'information représentative de caractéristiques des intervalles compris dans ladite trame comprend en outre pour chaque intervalle, un identifiant d'un taux de codage d'un code correcteur d'erreur appliqué aux données utiles transmises durant ledit intervalle.

5. Système de communication selon l'une quelconque des revendications précédentes, **caractérisé en ce que** chaque sous-intervalle est divisé en une pluralité de périodes comprenant une période (50000C) utilisée pour transmettre une séquence de symboles permettant à la station de commande (10) ou au dispositif mobile sans pilote (3A, 3B) recevant ladite séquence de symboles de faire une estimation de canal afin de réaliser des synchronisations fréquentielles, de phase, de rythme et des égalisations de signaux de réception et/ou une période (50000D) permettant de transmettre des données représentatives d'un numéro de sous-intervalle.

6. Système de communication selon l'une quelconque des revendications précédentes, **caractérisé en ce que** la station de commande (10) et chaque dispositif mobile sans pilote (3A, 3B) comprennent un module d'émission comprenant :
un module de codage canal (603) comprenant un module (6031) de codage LDPC utilisé pour coder les données utiles transmises durant un intervalle et un module (6032) de codage BCH utilisé pour coder les données représentatives d'un numéro de sous-intervalle ;
un module (604) de filtrage en bande de base de type filtre gaussien ; et,
un module (605) de modulation de phase à déplacement minimum ; et,
un module de réception comprenant :
un module de filtrage en bande de base (705) adapté pour assurer une sélectivité en bande de base ;
un module de démodulation d'une modulation de phase à déplacement minimum (708);
un module de décodage BCH (7091); et,
un module de décodage LDPC (7092).

7. Système de communication selon la revendication 6 **caractérisé en ce que** le module d'émission comprend en outre un module de sécurité de transmission utilisant une technique de sauts en fréquence et le module de réception comprend en outre un module de sécurité de transmission réciproque correspondant au module de sécurité de transmission ; et,
l'information représentative de caractéristiques des intervalles compris dans ladite trame comprend en outre pour chaque intervalle, un identifiant d'un numéro de canal en fréquence utilisé par le module de sécurité de transmission.

8. Système de communication selon la revendication 6 ou 7 **caractérisé en ce que** le module (6031) de codage LDPC est suivi d'un module d'entrelacement temporel de type ligne/colonne et le module (7092) de décodage LDPC est précédé d'un module de désentrelacement temporel de type ligne/colonne.

## Patentansprüche

1. Kommunikationssystem, welches in einem System von unbemannten mobilen Vorrichtungen (1) enthalten ist, das eine Steuerstation (10) und wenigstens eine unbemannte mobile Vorrichtung (3A, 3B) umfasst, und welches jeder unbemannten mobilen Vorrichtung ermöglicht, mit der Steuerstation (10) unter Anwendung eines Zugriffsverfahrens auf das Medium vom Typ eines Mehrfachzugriffs durch Zeitmultiplex zu kommunizieren, bei welchem jede Kommunikation in Rahmen erfolgt, wobei eine Rahmendauer für jeden in dem Kommunikationssystem verwendeten Rahmen so definiert ist, dass Latenzzeiten in jeder Kommunikation zwischen jeder unbemannten mobilen Vorrichtung (3A, 3B) und der Basisstation (10) erhalten werden, die mit einer Übertragung von Gesprächsaudiodaten kompatibel sind;
wobei das System **dadurch gekennzeichnet ist, dass** jeder Rahmen in mehrere Zeitschlitze aufgeteilt ist, die einen ersten Zeitschlitz (500A) umfassen, welcher der Steuerstation (10) ermöglicht, ein erstes Signal zu senden, das eine unbemannte mobile Vorrichtung (3A, 3B) bezeichnet, und jeder unbemannten mobilen Vorrichtung (3A, 3B) ermöglicht, sich mit einer von der Steuerstation (10) gelieferten Zeitreferenz zu synchronisieren, einen zweite Zeitschlitz (500B), welcher der durch das erste Signal bezeichneten unbemannten mobilen Vorrichtung (3A, 3B) ermöglicht, ein zweites Signal zu senden, das ihr somit ermöglicht, ihre Anwesenheit in dem System von unbemannten mobilen Vorrichtungen (1) zu bestätigen, und eine Folge von Zeitschlitzen (500C), die eine Anzahl von Zeitschlitzen umfasst, welche von einer maximalen Anzahl unbemannter mobiler Vorrichtungen abhängt, die von der Steuerstation (10) in dem System von unbemannten mobilen Vorrichtungen (1) gesteuert werden kann, wobei die Zeitschlitze der Folge von Zeitschlitzen (500C) verwendet werden, um Nutzdaten zwischen jeder unbemannten mobilen Vorrichtung (3A, 3B) und der Steuerstation (10) auszutauschen; und
jeder Zeitschlitz in mehrere Teilzeitschlitze (5000A, 5000B) mit einer Dauer aufgeteilt ist, die es ermöglicht, während dieser Dauer einen stationären Kanal zu erhalten.

2. Kommunikationssystem nach Anspruch 1, **dadurch gekennzeichnet, dass** die Steuerstation (10) eine Vielzahl von Sektorantennen (11) umfasst, die jeweils einen vordefinierten Sektor in der Umgebung dieser Vielzahl abdecken, und dadurch, dass die in dem System verwendeten Rahmen in einer Folge von Gruppen von aufeinander folgenden Rahmen (50) organisiert sind, wobei jede Gruppe von Rahmen gemäß einer Gruppenstruktur organisiert ist, die jedem Rahmen ein Paar zuordnet, das von einer Antenne der Steuerstation (10) und einer unbemannten mobilen Vorrichtung (3A, 3B), die in dem System von unbemannten mobilen Vorrichtungen (1) enthalten ist, gebildet wird, wobei jedes mögliche Paar einem anderen Rahmen der Gruppe von Rahmen (50) in Abhängigkeit von einer Position des Rahmens in der Gruppe zugeordnet ist, wobei eine Information, die für die Struktur der Gruppe repräsentativ ist, zwischen der Steuerstation (10) und jeder unbemannten mobilen Vorrichtung (3A, 3B) geteilt wird.

3. Kommunikationssystem nach Anspruch 2, **dadurch gekennzeichnet, dass** für jeden Rahmen eine Information, die für Merkmale der in dem Rahmen enthaltenen Zeitschlitze repräsentativ ist, von der Steuerstation (10) und jeder unbemannten mobilen Vorrichtung (3A, 3B) geteilt wird, wobei diese Information für jeden Zeitschlitz eine Information, die für in dem Zeitschlitz enthaltene Teilzeitschlitz-Nummern repräsentativ ist, eine Kennung einer Vorrichtung, welche die Steuerstation (10) oder eine der unbemannten mobilen Vorrichtungen (3A, 3B) ist, die während des Zeitschlitzes Nutzdaten senden kann, und eine Kennung einer Vorrichtung, welche die Steuerstation (10) oder eine der unbemannten mobilen Vorrichtungen (3A, 3B) ist, die während des Zeitschlitzes Nutzdaten empfangen kann, umfasst.

4. Kommunikationssystem nach Anspruch 3, **dadurch gekennzeichnet, dass** die Information, die für Merkmale der in dem Rahmen enthaltenen Zeitschlitze repräsentativ ist, außerdem für jeden Zeitschlitz eine Kennung eine Codierrate eines Fehlerkorrekturcodes umfasst, der auf die während des Zeitschlitzes übertragenen Nutzdaten angewendet wird.

5. Kommunikationssystem nach einem der vorhergehenden Ansprüche, **dadurch gekennzeichnet, dass** jeder Teilzeitschlitz in mehrere Perioden aufgeteilt ist, die eine Periode (50000C) umfassen, die verwendet wird, um eine Symbolfolge zu übertragen, die der Steuerstation (10) oder der unbemannten mobilen Vorrichtung (3A, 3B), welche die Symbolfolge empfängt, ermöglicht, eine Kanalschätzung durchzuführen, um Frequenz-, Phasen-, Taktsynchronisierungen und Entzerrungen von Empfangssignalen durchzuführen, und/oder eine Periode (50000D), die es ermöglicht, Daten zu übertragen, die für eine Teilzeitschlitz-Nummer repräsentativ sind.

6. Kommunikationssystem nach einem der vorhergehenden Ansprüche, **dadurch gekennzeichnet, dass** die Steuerstation (10) und jede unbemannte mobile Vorrichtung (3A, 3B) ein Sendemodul umfassen, welches umfasst:
ein Kanalcodierungsmodul (603), das ein LDPC-Codierungsmodul (6031), das verwendet wird, um die während eines Zeitschlitzes übertragenen Nutzdaten zu codieren, und ein BCH-Codierungsmodul (6032), das verwendet wird, um die Daten zu codieren, die für eine Teilzeitschlitz-Nummer repräsentativ sind, umfasst;
ein Basisband-Filterungsmodul (604) vom Typ eines Gauß-Filters; und
ein Modul (605) für Minimum Shift Keying Modulation; und
ein Empfangsmodul, welches umfasst:
ein Basisband-Filterungsmodul (705), das dafür ausgelegt ist, eine Selektivität im Basisband sicherzustellen;
ein Modul zur Demodulation (708) einer Minimum Shift Keying Modulation;
ein BCH-Decodierungsmodul (7091); und
ein LDPC-Decodierungsmodul (7092).

7. Kommunikationssystem nach Anspruch 6, **dadurch gekennzeichnet, dass** das Sendemodul außerdem ein Übertragungssicherheitsmodul umfasst, das ein Frequenzsprungverfahren anwendet, und das Empfangsmodul außerdem ein reziprokes Übertragungssicherheitsmodul umfasst, das dem Übertragungssicherheitsmodul entspricht; und
die Information, die für Merkmale der in dem Rahmen enthaltenen Zeitschlitze repräsentativ ist, außerdem für jeden Zeitschlitz eine Kennung einer Frequenzkanalnummer umfasst, die von dem Übertragungssicherheitsmodul verwendet wird.

8. Kommunikationssystem nach Anspruch 6 oder 7, **dadurch gekennzeichnet, dass** dem LDPC-Codierungsmodul (6031) ein Zeitverschachtelungsmodul vom Typ Zeile/Spalte nachfolgt und dem LDPC-Decodierungsmodul (7092) ein Zeitentschachtelungsmodul vom Typ Zeile/Spalte vorausgeht.

## Claims

1. Communication system included in a pilotless mobile device system (1) comprising a control station (10) and at least one pilotless mobile device (3A, 3B), enabling each pilotless mobile device (3A, 3B) to communicate with the control station (10) using a medium-access technique of the time division multiple access type in which each communication takes place in frames, a frame duration being defined for each frame used in the communication system so as to obtain latency times in each communication between each pilotless mobile device (3A, 3B) and the base station (10) that are compatible with a transmission of conversation audio data;
the system being **characterised in that**
each frame being divided into a plurality of timeslots comprising a first timeslot (500A) enabling the control station (10) to transmit a first signal designating a pilotless mobile device (3A, 3B) and enabling each pilotless mobile device (3A, 3B) to synchronise on a time reference given by the control station (10), a second timeslot (500B) enabling the pilotless mobile device (3A, 3B) designated by the first signal to transmit a second signal enabling it thus to acknowledge its presence in the pilotless mobile device system (1), and a succession of timeslots (500C) comprising a number of timeslots dependent on a maximum number of pilotless mobile devices that can be controlled by the control station (10) in the pilotless mobile device system (1), the timeslots in the succession of timeslots (500C) being used to exchange useful data between each pilotless mobile device (3A, 3B) and the control station (10); and
each timeslot is divided into a plurality of burst intervals (5000A, 5000B) with a duration making it possible to obtain a stationary channel during said duration.

2. Communication system according to claim 1, **characterised in that** the control station (10) comprises a plurality of sectoral antennas (11) each covering a predefined sector in the vicinity of said plurality and **in that** the frames used in said system are organised in a succession of groups of consecutive frames (50), each group of frames being organised in a group structure associating each frame with a pair formed by an antenna of the control station (10) and of a pilotless mobile device (3A, 3B) included in the pilotless mobile device system (1), each possible pair being associated with a different frame in the group of frames (50) according to a position of said frame in said group, information representing the group structure being shared between the control station (10) and each pilotless mobile device (3A, 3B).

3. Communication system according to claim 2, **characterised in that**, for each frame, information representing characteristics of the timeslots included in said frame is shared by the control station (10) and each pilotless mobile device (3A, 3B), this information comprising, for each timeslot, information representing burst interval numbers included in the timeslot, an identifier of a device from among the control station (10) or each pilotless mobile device (3A, 3B) being able to transmit useful data during said timeslot and an identifier of a device from among the control station (10) or each pilotless mobile device (3A, 3B) being able to receive useful data during said timeslot.

4. Communication system according to claim 3, **characterised in that** the information representing characteristics of timeslots included in said frame further comprises, for each timeslot, an identifier of a coding rate of an error correcting code applied to the useful data transmitted during said timeslot.

5. Communication system according to any of the preceding claims, **characterised in that** each burst interval is divided into a plurality of periods comprising a period (50000C) used for transmitting a sequence of symbols enabling the control station (10) or the pilotless mobile device (3A, 3B) receiving said sequence of symbols to make a channel estimation in order to carry out synchronisations of frequency, phase and timing and reception signal equalisations and/or a period (50000D) making it possible to transmit data representing a burst interval number.

6. Communication system according to any of the preceding claims, **characterised in that** the control station (10) and each pilotless mobile device (3A, 3B) comprise a transmission module comprising:
a channel coding module (603) comprising an LDPC coding module (6031) used for coding the useful data transmitted during a timeslot and a BCH coding module (6032) used for coding the data representing a burst interval number;
a baseband filtering module (604) of the Gaussian filter type; and
a minimum-shift continuous-phase modulation module (605); and
a reception module comprising:
a baseband filtering module (705) suitable for ensuring baseband selectivity;
a module for demodulation of a minimum-shift continuous-phase modulation (708);
a BCH decoding module (7091); and
an LDPC decoding module (7092).

7. Communication system according to claim 6, **characterised in that** the transmission module further comprises a transmission security module using a frequency hopping technique, and the reception module further comprises a reciprocal transmission security module corresponding to the transmission security module; and
the information representing characteristics of timeslots included in said frame further comprises, for each timeslot, an identifier of a frequency channel number used by the transmission security module.

8. Communication system according to claim 6 or 7, **characterised in that** the LDPC coding module (6031) is followed by a time interleaving module of the row/column type and the LDPC decoding module (7092) is preceded by a time deinterleaving module of the row/column type.
